# EUROPEAN PATENT APPLICATION

(11) **EP 4 704 304 A1**
(43) Date of publication of application: **04.03.2026**
(21) Application number: 24796966.0
(22) Date of filing: 22.04.2024
(51) Int. Cl.: H02J 50/40, B60L 5/00, B60L 53/12, B60M 7/00, G05D 1/43, H02J 7/00, H02J 50/10, H02J 50/90

(54) **NON-CONTACT POWER-FEEDING SYSTEM**

(30) Priority: 24.04.2023 JP 2023070549
(71) Applicant: DENSO CORPORATION, Kariya-city, Aichi 448-8661 (JP)
(72) Inventor: TAKAHASHI, Eisuke, Kariya- city, Aichi 4488661 (JP); KANESAKI, Masaki, Kariya- city, Aichi 4488661 (JP); SHIBANUMA, Mitsuru, Kariya- city, Aichi 4488661 (JP); NAKAYASHIKI, Yusei, Kariya- city, Aichi 4488661 (JP); SUZUKI, Hironari, Kariya- city, Aichi 4488661 (JP)
(74) Representative: TBK
(86) International application number: PCT/JP2024/015715
(87) International publication number: WO 2024/225220

(57) **Abstract**

A wireless power supply system performs wireless power supply to a mobile object (2), the mobile object including a power reception unit. The wireless power supply system includes: a power supply (10) configured to supply AC power, and at least one power transmission unit (4a, 4b, 4c) provided on at least a portion of a travelling surface (6) along which the mobile object travels. Each of the at least one power transmission unit includes a power transmission coil within a containment case, receives power from the power supply, and supplies power to the power reception unit via the power transmission coil from beneath the mobile object.

## Description

### [CROSS-REFERENCE TO RELATED APPLICATIONS]

This application is based on Japanese Application No. 2023-070549 filed on April 24, 2023. The contents of these applications are incorporated herein by reference in their entirety.

### [TECHNICAL FIELD]

The present disclosure relates to a wireless power supply system.

### [BACKGROUND ART]

As described in Patent Document 1, a system using a mobile object that travels within a factory, which is a workspace, to perform transport is known. This type of mobile object can travel forward or backward and turn on the spot, enabling it to travel freely throughout the factory. Specifically, the mobile object may be an unmanned conveyor vehicle (Automatic Guided Vehicle, AGV). Methods for supplying power to the mobile object of this type are known, where power supply equipment is installed at predetermined locations within the factory, and power is supplied at these power supply locations via contact methods or non-contact methods from the side of the mobile object.

### [PRIOR ART REFERENCES]

### [PATENT DOCUMENT]

[Patent Document 1] US8831984B2

### [SUMMARY OF INVENTION]

However, the contact-type power supply and the non-contact-type power supply from the side of the mobile object reduces freedom of travelling of the mobile object during power supply and limits the installation locations for the power supply equipment, making it difficult to increase the number of power supply opportunities. When power supply opportunities are few, the mobile objects may end up waiting at the power supply location for charging instead of working, reducing the operating rate of the transport system. To compensate, increasing the number of mobile objects may became necessary. Considering the above issues, this disclosure aims to provide a wireless power supply system capable of performing efficient power supply without compromising freedom of travelling of the mobile object.

This disclosure can be realized in the following embodiment.

According to one aspect of the present disclosure, a wireless power supply system is provided. This wireless power supply system performs wireless power supply to a mobile object equipped with a power reception unit having a power reception coil. It includes a power supply that supplies AC power and a power transmission unit distributed over at least a portion of a travelling surface along which the mobile object moves, wherein the power transmission unit includes a power transmission coil within a containment case, that receives power from the power supply and supplies power to the power reception unit via the power transmission coil from beneath the mobile object. According to this configuration, since power can be supplied wirelessly from beneath the mobile object to the mobile object while it is moving, the installation flexibility for placing the power transmission unit on the travelling surface is increased, making it easier to provide power supply opportunities. Therefore, there is no need for the mobile object to stop operation and wait at a power supply location for charging, thereby improving the operational efficiency of mobile object.

### [BRIEF DESCRIPTION OF DRAWINGS]

The above objectives and other objectives, features, and advantages of the present disclosure will become clearer from the following detailed description with reference to the accompanying drawings. The drawings are as follows:
Fig. 1 is a plan view showing a schematic configuration of the wireless power supply system according to a first embodiment of the present disclosure;
Fig. 2 is a side view showing a schematic configuration of the wireless power supply system according to the first embodiment of the present disclosure;
Fig. 3 is a schematic side view showing a conveyor vehicle;
Fig. 4 is a schematic bottom view showing the conveyor vehicle;
Fig. 5 is a block diagram showing the schematic configuration of the wireless power supply system according to the first embodiment of the present disclosure;
Fig. 6 is a plan view schematically showing a power transmission unit;
Fig. 7 is a side view schematically showing the power transmission unit;
Fig. 8 is a sectional view schematically showing a wiring;
Fig. 9 is a flowchart showing processing steps of a fault determination process;
Fig. 10 is a plan view schematically showing the power transmission unit according to a second embodiment of the present disclosure;
Fig. 11 is a side view schematically showing the power transmission unit according to the second embodiment of the present disclosure;
Fig. 12 is a cross-sectional view schematically showing a wiring according to another embodiment of the present disclosure;
Fig. 13 is a flowchart illustrating the processing steps of the fault determination process according to another embodiment of the present disclosure.

### [DESCEIPTION OF EMBODIMENTS]

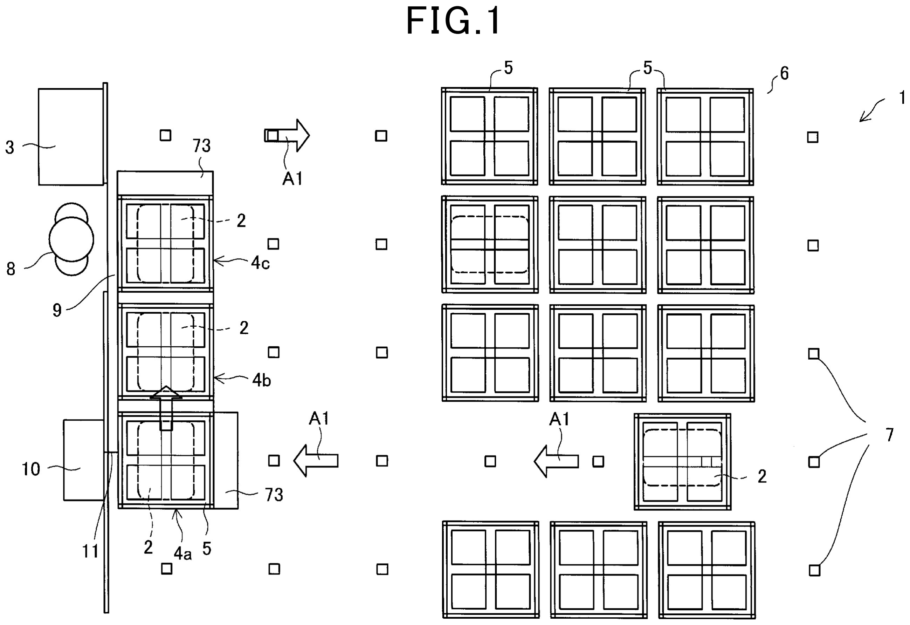

The following describes multiple embodiments of the present disclosure based on Figures 1 to 13.

### A. First Embodiment:

### A1. Overall Configuration of a wireless power supply system 1:

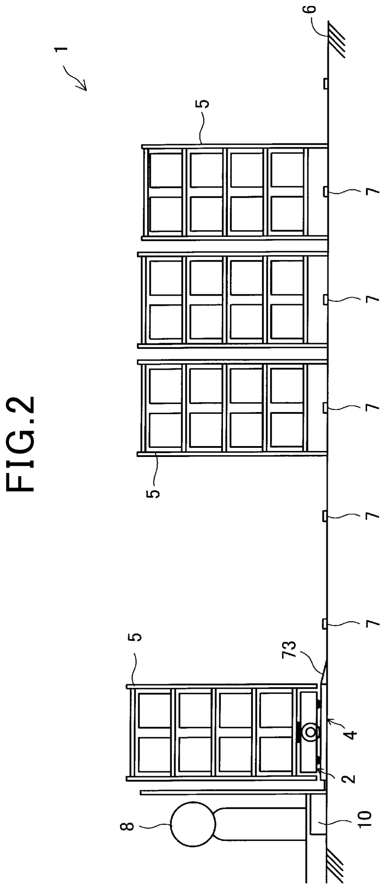

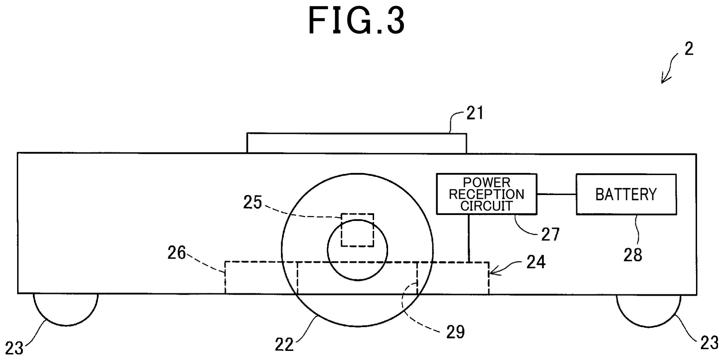

As shown in Figures 1 and 2, a wireless power supply system 1 according to a first embodiment may include, for example, multiple unmanned conveyor vehicles 2 deployed within a warehouse, a management device 3 that communicates wirelessly with each conveyor vehicle 2, and multiple power transmission units 4 provided on a travelling surface 6. The wireless power supply system 1 is capable of wirelessly supplying power from the power transmission unit 4 to a power reception unit 24 (see Figure 3) provided in the conveyor vehicle 2, while the conveyor vehicle 2 is travelling. The conveyor vehicle 2 is an example of a "mobile object".

A worker 8 performs loading operations, such as receiving cargo loaded onto a shelf 5 and transported by conveyor vehicle 2, or transferring cargo to the shelf 5, at a location such as a loading space 9 set up in a corner of the warehouse. Cargos of any type are loaded onto the shelf 5. As an example, the conveyor vehicle 2 may travel along the route indicated by the white-filled arrow A1 in Figure 1 to transport the shelf 5. The loading space 9 is a location where the cargo is loaded and is an example of a "stop position" where the conveyor vehicle 2 stops.

The multiple conveyor vehicles 2 (five in this embodiment) are deployed on the travelling surface 6 within the warehouse. The conveyor vehicle 2 is an autonomous unmanned conveyor vehicle (Automatic Guided Vehicle, AGV) capable of travelling forward, backward, left, or right, and turning. The conveyor vehicle 2 travels along multiple position markers 7 placed at approximately equal intervals on the travelling surface 6. In the position markers 7 coordinate information such as the travel path and stopping positions of the conveyor vehicle 2 are recorded in the manner of, for example, QR codes (registered trademark) or RFID (radio frequency identification).

The management device 3 is installed, for example, near the loading space 9, and centrally manages power supply to the conveyor vehicle 2, movement of the conveyor vehicle 2, transport of loaded items, etc. On the travelling surface 6 in the loading space 9, multiple power transmission units 4 (three in this embodiment) are provided. The power transmission unit 4 supplies power wirelessly to the power reception unit 24 of the conveyor vehicle 2. In this embodiment, three power transmission unit 4a, 4b, and 4c are integrated into a single module. The number of modules may be two, four or more, and power transmission unit may not be integrated into a module.

Hereinafter, when the three power transmission units 4a, 4b, and 4c are not specifically distinguished, each of them is simply referred to as a "power transmission unit 4". The detailed configuration of the power transmission unit 4 is described below. A power supply 10 supplies AC power to the power transmission unit 4. The power supply 10 is an external power supply installed on the ground. The power supply 10 and each of the multiple power transmission units 4 are connected by a wiring 11.

### A2. Configuration of a conveyor vehicle 2:

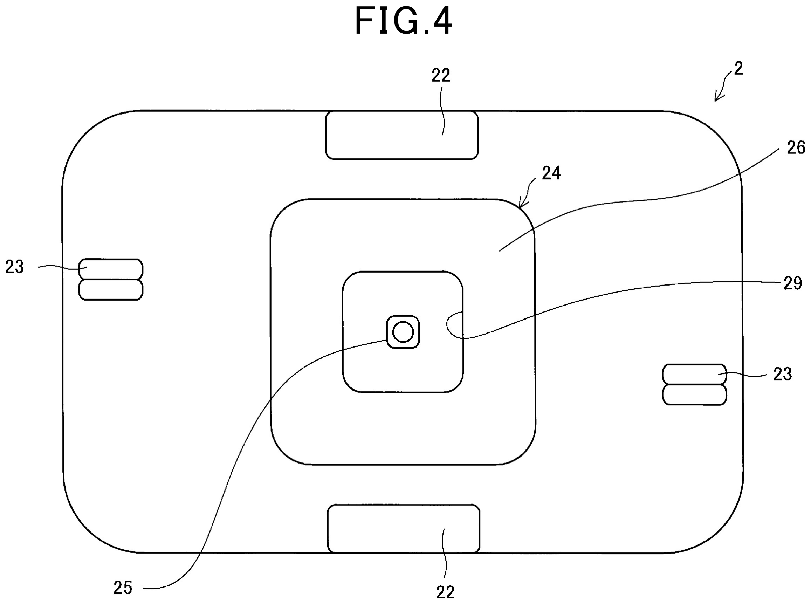

As shown in Figures 3 and 4, the conveyor vehicle 2 according to this embodiment includes a cargo bed 21, a pair of driving wheels 22, a pair of steering wheels 23, the power reception unit 24, and a marker sensor 25. The shelf 5 can be loaded onto the cargo bed 21. A pair of driving wheels 22 are provided near the center in the front-rear direction and at the terminals in the left-right direction of the conveyor vehicle 2. The conveyor vehicle 2 can travel forward or backward using driving force transmitted from a motor generator (not shown). A pair of steering wheels 23 are provided near the center in the left-right direction and at the terminals in the front-rear direction of the conveyor vehicle 2. The steering wheel 23 changes the direction of travel of the conveyor vehicle 2. Hereinafter, when the driving wheel 22 and the steering wheel 23 are not specifically distinguished, they are simply referred to as "wheels 22, 23".

The power reception unit 24 includes a power reception coil 26 and a power reception circuit 27. The power reception coil 26 is stored within a case. The power reception coil 26 is connected to the power reception circuit 27. The output terminal of the power reception circuit 27 is connected to a battery 28. The power reception circuit 27 includes a rectifier circuit that converts AC voltage output from the power reception coil 26 to DC voltage. The power reception circuit 27 may also include a DC/DC converter that converts DC voltage generated by the rectifier circuit to a voltage suitable for charging the battery 28. DC voltage output by the power reception circuit 27 is used not only to charge the battery 28 but also to drive a motor generator via an inverter circuit (not shown).

The marker sensor 25 is an image sensor that detects the position marker 7. The marker sensor 25 is fixed above the power reception coil 26 and approximately at the center of the vehicle body. An opening potion 29 is formed below the marker sensor 25. The opening potion 29 has a shape corresponding to the central hollow region of the annularly formed power reception coil 26. The conveyor vehicle 2 may additionally include a power meter.

### A3. Functional Block Configuration:

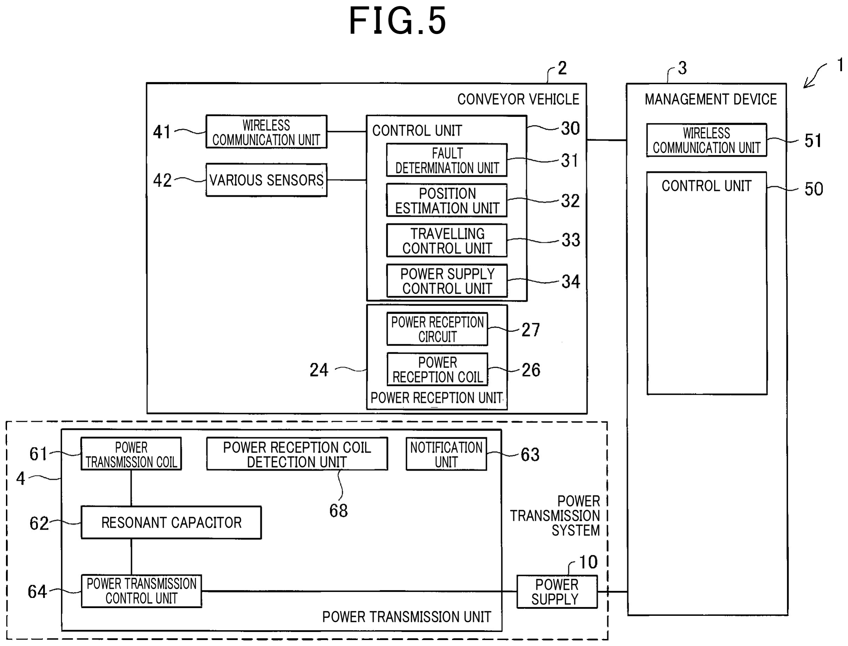

Next, functions of each part constituting the wireless power supply system 1 are described in detail with reference to Figure 5. As shown in Figure 5, the conveyor vehicle 2 includes a control unit 30, a wireless communication unit 41, and various sensors 42. The control unit 30 is primarily configured as a microcomputer and includes a CPU, ROM, RAM, etc. (not shown). The storage units, such as ROM and RAM, store map data indicating the travelling route layout and loading operation positions, travel programs, operation execution programs, communication programs and so on.

The control unit 30 is connected to the various sensors 42 (which includes the position marker 7), the wireless communication unit 41 for communicating with the management device 3, and other components such as a motor driver for wheel drive (not shown). Based on information received from the management device 3 and input signals from the various sensors 42, the control unit 30 drives and steers the wheels 22, 23 via the motor driver. The motor driver operates using DC power supplied from the battery 28. The conveyor vehicle 2 then autonomously travels along a pre-planned route. Furthermore, as described below, the control unit 30 can transmit detection results to the management device 3 when it detects a fault in the power transmission unit 4.

The control unit 30 includes functional blocks such as a fault determination unit 31, a position estimation unit 32, a travelling control unit 33, and a power supply control unit 34. Each of these functional blocks is implemented by the CPU in the control unit 30 executing computer programs stored in ROM to perform the corresponding processing. It means they are implemented with software. However, at least some of the functional blocks may be implemented with hardware. The fault determination unit 31 determines whether a fault occurs in the power transmission system, including the power transmission unit 4 and the power supply 10. Details of the operation of the fault determination unit 31 are described below. The position estimation unit 32 estimates the current position of the conveyor vehicle 2 based on position information from the marker sensor 25 and/or the rotational position of the motor, etc. The travelling control unit 33 controls the operation of the conveyor vehicle 2 via the motor driver so that the self-position estimated by the position estimation unit 32 matches the target position. The power supply control unit 34 controls the reception circuit 27 to perform power reception when receiving wireless power supply during travel.

The management device 3 includes a wireless communication unit 51 and a control unit 50. The control unit 50 is primarily configured as a microcomputer and includes a CPU, ROM, RAM, etc. (not shown). The ROM, RAM, and other storage devices store a power supply program related to power supply, a communication program for communicating with the conveyor vehicle 2, and identification information for identifying the conveyor vehicle 2. The wireless communication unit 51 is connected to the control unit 50. The management device 3 communicates with each of the conveyor vehicles 2 via the wireless communication unit 51 and centrally manages the travelling of each of the conveyor vehicles 2. The management device 3 controls the power transmission control unit 64 (described below) to manage power supply to the target conveyor vehicle 2. The management device 3 also manages information such as the cargo carried by each of the conveyor vehicle 2.

### A4. Configuration of a power transmission unit 4:

The power transmission unit 4 includes a power transmission coil 61, a resonant capacitor 62, a notification unit 63, a power transmission control unit 64, and a power reception coil detection unit 68. The notification unit 63 externally notifies a power supply system fault. The notification unit 63 may be, for example, an LED incorporated into a display surface of the QR code. The notification unit 63 may externally notify the power supply system fault by its lighting state. The marker sensor 25 of the conveyor vehicle 2 can read the lighting state of the notification unit 63. The notification unit 63 may, for example, include a blue LED to notify of the power transmission unit 4 fault and a red LED to notify of the power supply 10 fault. The power supply 10 is composed of components such as an inverter. The power supply 10 converts power of the power supply system into high-frequency AC power. The power transmission control unit 64 detects the presence of power reception coil 26 using the power reception coil detection unit 68 and determines whether to supply high-frequency AC power from the power supply 10 to the power transmission coil.

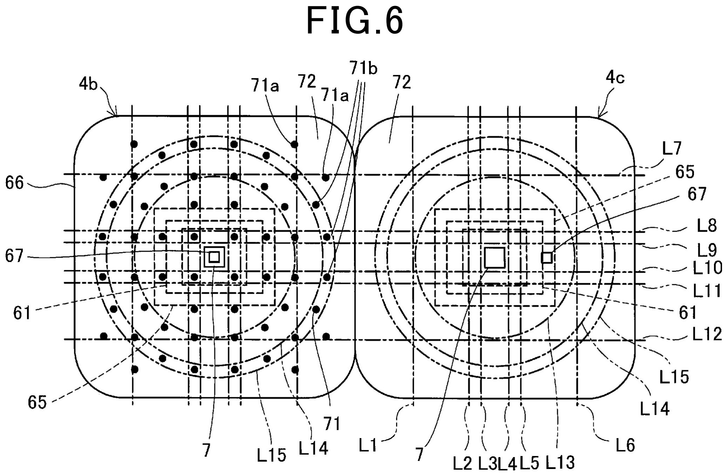

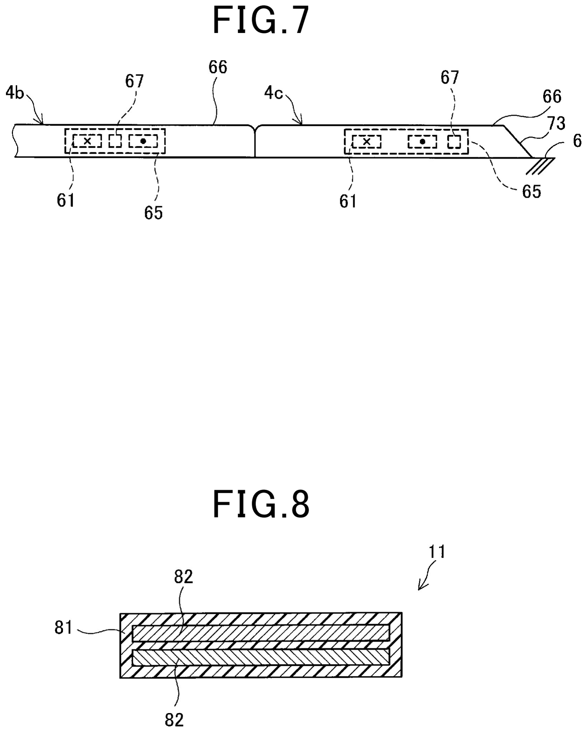

As shown in Figures 6 and 7, the power transmission unit 4 includes an inner case component 65 which stores the power transmission coil 61, and a containment case 66 which internally stores the inner case component 65. Figures 6 and 7 illustrate two power transmission units 4 including the power transmission unit 4b and the power transmission unit 4c among three power transmission units 4, as an example. Inside of the inner case component 65, besides the coil substrate on which the power transmission coil 61 is formed, a power transmission circuit (not shown in Fig. 6), a ferrite plate (not shown), a heat sink plate, etc., are stored. The power transmission unit 4 according to this embodiment includes the inner case component 65 and a power transmission circuit but is not limited to this configuration. The power transmission unit 4 should include at least the power transmission coil 61 and the containment case 66. The inner case component 65 may be omitted. The inner case component 65 and the containment case 66 are formed from non-conductive materials, such as non-magnetic materials like resin.

The power transmission unit 4 includes an electronic component 67 within the inner case component 65. The electronic component 67 is, for example, a resonant capacitor. The electronic component 67 may include electronic components of the power transmission control unit 64. In Figure 6, the line passed by the wheels 22, 23 of the conveyor vehicle 2 in a plan view, i.e., a travel trajectory line, is shown by a two-dot dashed line. The travel trajectory lines L1, L2, L3, L4, L5, L6, L7, L8, L9, L10, L11, and L12, resulting from the forward/backward and left/right movement of the wheels 22 and 23, are shown in Figure 6 as multiple straight lines (12 lines corresponding to one of the power transmission unit 4) extending vertically and horizontally. The travel trajectory lines L13, L14, L15, resulting from the rotational movement of the wheels 22 and 23, are shown in Figure 6 as multiple circular lines in different sizes (three lines corresponding to one of the power transmission units 4). Hereinafter, when multiple travel trajectory lines are not specifically distinguished, they are simply referred to as "travel trajectory line L".

The power transmission unit 4 is provided on the travelling surface 6 such that the electronic component 67 is positioned offset from the travel trajectory line L in a plan view. By positioning the power transmission unit 4 in this manner, load from the conveyor vehicle 2 is prevented from being applied to the electronic component 67. Therefore, fault of the electronic component 67 is suppressed.

The center portion of the power transmission unit 4 substantially coincides with the position marker 7 on the travelling surface 6 in position. Furthermore, the position marker 7 substantially coincides with the center of rotation of the conveyor vehicle 2 in position. In this embodiment, the position marker 7 is printed on the upper surface of the containment case 66, approximately at its center, thereby being integrated with the power transmission unit 4. In the case where the position marker 7 is a QR code, it may be printed on the upper surface of containment case 66. In the case where the position marker 7 is an RFID tag or similar component, it may be stored within the containment case 66. Thus, by integrating the position marker 7 with the power transmission unit 4, it is not necessary to install the position marker 7 separately from the power transmission unit 4, making installation easier.

The power transmission unit 4 is provided with the position marker 7 as a reference. "Provided with position marker 7 as a reference" includes a configuration where, as in this embodiment, the center of the power transmission unit 4 coincides with the center of the position marker 7 in position, and the power transmission unit 4 overlaps in a plan view with the entire position marker 7. Other configurations include the power transmission unit 4 overlapping in a plan view with a portion of the position marker 7 using the position marker 7 as a reference line, or the power transmission unit 4 being positioned at a predetermined horizontal distance from the position marker 7 using the position marker 7 as a reference line, even if not overlapping in a plan view. In this configuration, the position marker 7 is provided as a separate unit from the power transmission unit 4.

When the conveyor vehicle 2 travels over the power transmission unit 4, the power transmission coil 61 and the power reception coil 26 face each other, enabling power supply from beneath the conveyor vehicle 2. The management device 3 may determine to which conveyor vehicle 2 to supply power based on the remaining power of the battery 28 of each of the conveyor vehicles 2 or based on the elapsed time since the previous power supply.

Multiple support pillars 71 are provided within the containment case 66, as indicated by the solid black circles in Figure 6. To avoid cluttering the drawings, Figure 6 shows the support pillars 71 within the power transmission unit 4b. However, the support pillars 71 are similarly formed within the power transmission unit 4c as well.

Each of the support pillars 71 extends continuously from the top surface to the bottom surface of the containment case 66, maintaining the vertical space within the containment case 66. Each of the support pillars 71 has a cylindrical shape of the same size. The multiple support pillars 71a are arranged, for example, to align with the travel trajectory line L. The portion of the power transmission unit 4 corresponding to the travel trajectory line L is where the weight of the conveyor vehicle 2 and the conveyed object acts directly on the power transmission unit 4 via the wheels 22, 23. Therefore, by providing the support pillars 71 at the portions of the containment case 66 corresponding to the travel trajectory line L where greater load is applied, the strength of the power transmission unit 4 is effectively enhanced.

Furthermore, the multiple support pillars 71b are provided between the travel trajectory lines L that are close to each other. For example, an area where the travel trajectory lines L are close to each other is between the outermost circular travel trajectory line L15 and the circular travel trajectory line L14 located inside it. The outermost circular travel trajectory line L15 and the circular travel trajectory line L14 located inside it are close together. Placing the support pillar 71 at positions corresponding to each travel trajectory line L14, L15 could increase the number of support pillar 71, potentially interfering with the arrangement of other components. Therefore, when travel trajectory lines L are close together, placing support pillar 71 between the adjacent travel trajectory lines L allows for strengthening the containment case 66 near the load-bearing area without wasting space.

The size of the upper surface 72 of the containment case 66 is large enough for all the wheels 22, 23 of the conveyor vehicle 2 to be placed on simultaneously. This prevents instability in posture of the conveyor vehicle 2, such as when only one of the wheels 22, 23 rides onto the power transmission unit 4. Furthermore, as shown in Figure 1, each of the power transmission unit 4 has the slope 73, which connects to the upper surface 72 of the containment case 66 and links the upper surface 72 to the travelling surface 6. In this embodiment, the slope 73 is provided on the entry side of the conveyor vehicle 2 at the first power transmission unit 4A encountered along the travel path entering the loading space 9 and on the exit side of the conveyor vehicle 2 at the third power transmission unit 4C. The presence of the slope 73 reduces the impact on the conveyor vehicle 2 when it rides onto the power transmission unit 4 and when it dismounts from the power transmission unit 4.

As shown in Figure 8, the shape of the wiring 11, which connects the power supply 10 to each of the power transmission units 4, is flat. In the installed state, the lateral length of the wiring 11 is longer than its vertical length. The wiring 11 has a conductor 82 inside an insulator 81. In the conductor 82 shown in Figure 8, hatching with different orientations is applied to distinguish the forward and reverse conduction paths. The conductor 82 is a thin sheet-like conductor and is arranged within the insulator 81 in a configuration where the forward and reverse conduction paths are separated vertically. This arrangement allows the opposing magnetic fields generated in the conductor 82 within the forward and reverse conduction paths to cancel each other. Consequently, it suppresses eddy current losses in the conductor 82 caused by the generation of high-frequency magnetic fields when high-frequency current is applied. Furthermore, using a thin wiring allows the average distance between the reciprocating conductive paths to be reduced, enhancing the magnetic field cancellation effect. Note that eddy current losses can be reduced not only in the conductor 82 itself but also in the unillustrated electromagnetic noise shielding covering the periphery of the conductor 82. Furthermore, using the thin wiring 11 allows the conveyor vehicle 2 to travel without obstruction even when the wiring 11 is placed on the floor.

### A5. Fault Determination Processing:

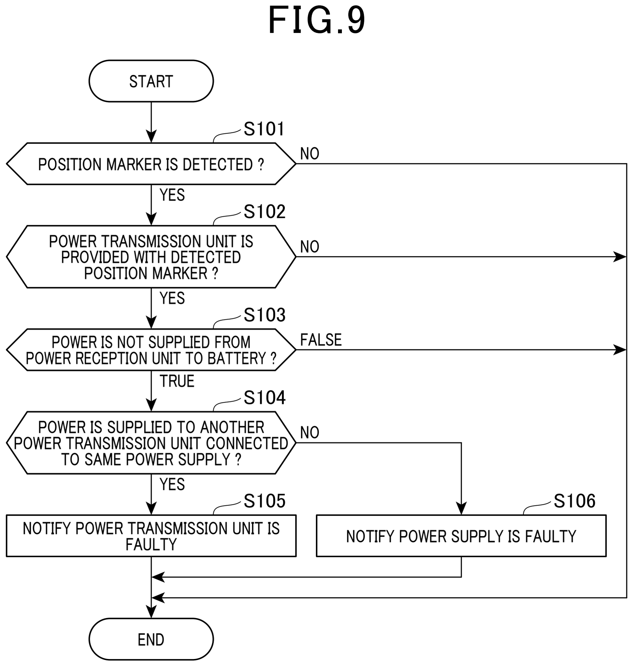

Next, the fault determination processing executed by the fault determination unit 31 of the conveyor vehicle 2 is described. The fault determination process shown in Figure 9 is repeatedly executed at predetermined intervals while the conveyor vehicle 2 is traveling on the travelling surface 6. As shown in Figure 9, in S101, it is determined whether the position marker 7 is detected by the marker sensor 25. When the position marker 7 is detected, the process proceeds to S102, where it is determined whether the power transmission unit 4 is provided with the detected position marker 7. The control unit 30 of the conveyor vehicle 2 determines whether the power transmission unit 4 is provided by reading a signal indicating the presence of the power transmission unit 4 incorporated to the detection signal of the position marker 7. Alternatively, the control unit determines whether the power transmission unit 4 is provided by sending an identification of the position marker 7 to the management device 3, inquiring the presence of the power transmission unit 4 corresponding to the identification.

When it is determined that the power transmission unit 4 is provided with the detected position marker 7 (S102: Yes), the process proceeds to S103, where it is determined whether power is not supplied from the power reception unit 24 to the battery 28. In S102, for example, when the conveyor vehicle 2 detects that the power transmission unit 4 is provided at the read position and power is not supplied despite a power supply permission being issued, it is determined that power is not supplied. In such a state where power is not supplied, it is estimated that there is an abnormality in either the receiving-side or transmitting-side equipment.

When it is determined that power is not supplied from the power reception unit 24 to the battery 28 in S103 (S103: True), the process proceeds to S104 to determine whether power is supplied to another power transmission unit 4 connected to the same power supply 10. This determination is made, for example, by receiving the power supply history stored in the management device 3. When it is determined that power supply was possible to another power transmission unit 4 connected to the same power supply 10 (S104: Yes), the process proceeds to S105 and notifies the management device 3 that the power transmission unit 4 is faulty. This is because, for example, when the conveyor vehicle 2 currently on the power transmission unit 4C is performing the fault detection process and power supply was possible for another power transmission unit 4A, 4B connected to the same power supply 10, the power supply 10 and the power reception unit 24 are likely normal, making it highly probable that the fault is in the power transmission unit 4C.

On the other hand, when it is determined that power is not supplied to another power transmission units 4 connected to the same power supply 10 in S104 (S104: No), the process proceeds to S106 and notifies the management device 3 that the power supply 10 is faulty. This is because, for example, when the conveyor vehicle 2 currently on power transmission unit 4C is performing the fault detection process, and power supply is also not possible on another power transmission unit 4A and 4B connected to the same power supply 10, the possibility of a fault in the power supply 10 is higher.

As described above, the fault determination unit 31 determines whether a fault occurs in power transmission system based on information on whether power reception was possible on another power transmission unit 4 units. Note that in the fault determination after S104, it is also conceivable that the power reception unit 24, rather than the power transmission system, may have failed, for example, after passing through the power transmission unit 42B. However, the frequency of faults in the power transmission system receiving load from above is higher, and the possibility of a fault occurring immediately after power reception was possible is also low, so the determination is made as described above. After a fault notification is made in S105 or S106, this processing routine terminates. The notifications in S105 and S106 may include displaying the faulted device's ID, etc., on an LCD display mounted to the conveyor vehicle 2, in addition to notifying the management device 3.

Furthermore, in the fault determination process, this processing routine terminates in any of the following cases: when the position marker 7 is determined not to have been detected (S101: No), when the power transmission unit 4 is determined not to be provided with the detected position marker 7 (S102: No), or when power is determined to be supplied from the power reception unit 24 to the battery 28 (S103: False).

In the flowchart shown in Figure 9, the conveyor vehicle 2 performs the fault determination process. In addition to the above fault determination process, the power transmission unit 4 may have a fault determination unit that determines the presence or absence of its own fault and may perform fault determination using the energized state or applied voltage. In this case, when a fault is determined at the power transmission unit 4, it may externally notify by lighting the LED of the notification unit 63. Furthermore, the fault determination unit 31 of the conveyor vehicle 2 may read the illumination of notification unit 63 via the marker sensor 25 and notify the management device 3 of the fault.

### A6. Effect:

In the wireless power supply system of the first embodiment, power is supplied from below to the conveyor vehicle 2 while it is in operation, i.e., during transport operations. For example, the contact-type power supply or the non-contact power supply from the side of the conveyor vehicle 2 restricts the movement freedom of the conveyor vehicle 2 during power supply and limits the installation locations for power supply equipment. However, in the above embodiment, power supply is possible without restricting the travelling freedom of the conveyor vehicle 2. Furthermore, the high installation flexibility of placing the power transmission unit 4 on the travelling surface 6 makes it easy to provide power supply opportunities.

Therefore, for example, the conveyor vehicle 2 do not need to wait at power supply locations without performing work for charging, enabling improved operational efficiency of the transport system. Since the downtime at the loading space 9 is efficiently utilized for charging, there is no need for the conveyor vehicle 2 to stop specifically for charging. Consequently, the required number of the conveyor vehicles 2 is reduced.

In the above embodiment, the power transmission unit 4 is placed based on the position marker 7 of the travelling surface 6 at the loading space 9. However, the power transmission unit 4 may also be placed in other areas where the conveyor vehicle 2 has a high dwell rate. For example, multiple power transmission units 4 may be placed along the path entering the loading space 9. Thus, by placing more of the power transmission unit 4 in areas where the conveyor vehicle 2 frequently slows down or stops, or in areas with high travel frequency, the required power is supplied with fewer power transmission coils 61, enabling efficient power supply. As described above, if there are access passages that serve as entry/exit routes to the loading space 9, or routes that are traversed repeatedly during the round trip to the loading space 9, it is advantageous to actively install the power transmission unit 4 on the travelling surface 6 of such routes.

In the wireless power supply system 1 of the first embodiment, the position marker 7 is integrated with the power transmission unit 4. That is, since the position marker 7 and the power transmission unit 4 do not need to be installed separately, the installability of both the position marker 7 and power transmission unit 4 is improved.

In the wireless power supply system 1 of the first embodiment, multiple support pillars 71 are provided within the containment case 66 at positions corresponding to the travel trajectory lines L of the wheels 22, 23. This suppresses damage to the containment case 66. Furthermore, since the support pillars 71 are positioned on or near the travel trajectory line L to correspond with it, they efficiently reinforce the loaded areas while suppressing cost increases from installing an unnecessarily large number of support pillars 71.

In the wireless power supply system 1 of the first embodiment, the opening portion 29 corresponding to the detection range of the marker sensor 25 is formed in the power reception unit 24 of the conveyor vehicle 2. This enables reliable reading of the position marker 7 located below the conveyor vehicle 2 and allows a configuration where the marker sensor 25 does not interfere with the detection operation of the position marker 7.

In the wireless power supply system of the first embodiment, the slope 73 is provided. Consequently, in a configuration where the power transmission unit 4 is exposed and mounted above the travelling surface 6, the impact on the conveyor vehicle 2 when it rides onto the power transmission unit 4 and when it dismounts from the power transmission unit 4 are reduced.

The conveyor vehicle 2 of the wireless power supply system of the first embodiment includes the fault determination unit 31. This enables repair and replacement of the faulty power transmission unit 4. By detecting faults and promptly repairing or replacing the faulty device, it suppresses reduced operational rates due to insufficient power supply to the conveyor vehicle 2. Furthermore, since fault determination is performed using information from the position marker 7 and the power supply status, no additional equipment or functions are required for fault determination, simplifying system configuration.

The power transmission unit 4 further includes the notification unit 63, which reports faults in a format readable by the marker sensor 25. The conveyor vehicle 2 can detect the illumination of the notification unit 63 via the marker sensor 25 and notify the management device 3. That is, the power transmission unit 4 does not communicate directly with the management device 3 to report faults; instead, the power transmission unit 4 only signals faults externally. The conveyor vehicle 2 can then read this fault notification while in operation and relay it to the management device 3. Thus, faults are notified to the management device 3 via the marker sensor 25 of the conveyor vehicle 2 without equipping the power transmission unit 4 with communication means. This is more efficient than, for example, a warehouse manager visually inspecting LED lights to confirm faults.

### B. Second Embodiment:

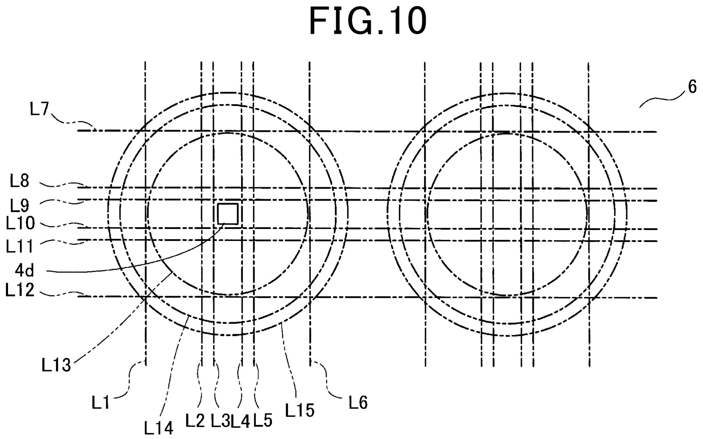

Next, a second embodiment is described with reference to Figures 10 to 12. Note that in the second embodiment, the overall configuration of the wireless power supply system 1, the circuit configuration of the wireless power supply system 1, the mechanical configuration of the conveyor vehicle 2, etc., are substantially the same as in the first embodiment. Therefore, substantially identical parts are designated by the same reference symbols, and their descriptions are omitted.

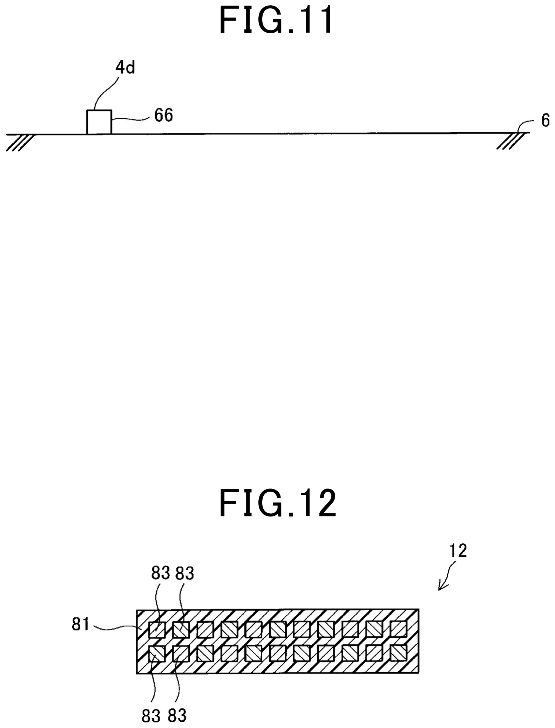

As shown in Figures 10 and 11, a power transmission unit 4d in the wireless power supply system 1 of the second embodiment is smaller than the power transmission unit 4 in the first embodiment. The power transmission unit 4d is exposed and positioned above the travelling surface 6 at a location corresponding to the pivot center of the conveyor vehicle 2, arranged to avoid multiple travel trajectory lines L. The size of power reception coil 26 of the conveyor vehicle 2 may be appropriately adjusted considering factors such as the coupling coefficient with the power transmission coil 61. Furthermore, it does not include the inner case component 65, and components such as the coil substrate and ferrite plate are housed within containment case 66.

According to the second embodiment, the same effects as the first embodiment are achieved. Furthermore, although the power transmission unit 4 is exposed and provided above the travelling surface 6, it is made smaller compared to the first embodiment to avoid the travel trajectory line L of the wheels 22, 23. Consequently, during operation, the conveyor vehicle 2 does not ride up onto power transmission unit 4, allowing for reduced power consumption. Additionally, running stability is maintained.

### C. Another Embodiments:

(C1) In the above embodiments, the power transmission unit 4 was provided on top of the travelling surface 6, but it may also be embedded within the travelling surface 6. In this configuration as well, it is preferable to embed the power transmission unit 4 such that the position of the electronic component 67 is offset in a plan view relative to the travel trajectory line L of the wheels 22 and 23. Furthermore, in this configuration, the support pillar 71 is also placed at a position corresponding to the travel trajectory line L to enhance the strength of the containment case 66. Additionally, using a flat-shaped wiring 11 allows for reduced excavation of the floor when embedding wiring 11, improving installability.

(C2) In the above embodiments, the conveyor vehicle 2 detects the position marker 7 provided on the travelling surface 6 and travels over the position marker 7. Alternatively, a configuration using a lidar to control the travel of the conveyor vehicle 2 is also possible. In this configuration, the position marker 7 and the marker sensor 25 need not be provided.

(C3) In the above embodiments, the marker sensor 25 was configured as a separate unit from the power reception coil 26, but it may also be configured by incorporating the marker sensor 25 into the power reception unit 24. For example, when the position marker 7 is an RFID, the marker sensor 25 for detecting the RFID can be incorporated onto the substrate of the power reception unit. In this configuration, the relative positions of the power reception coil 26 and the marker sensor 25 are fixed, preventing mutual interference in the operation or power supply of the marker sensor 25. Furthermore, since there is no need to account for misalignment between the marker sensor 25 and the position marker 7, the opening portion 29 is unnecessary. Note that the marker sensor 25 need only be capable of reading the position marker 7 on the travelling surface 6 and may be provided on the side of the conveyor vehicle 2.

(C4) In each of the above embodiments, the position marker 7 may be printed on a plate separate from the power transmission unit 4 and provided on the travelling surface 6.

(C5) In the above embodiments, multiple power transmission units 4a, 4b, 4c were connected to the single power supply 10 via the wiring 11. However, a single power transmission unit 4 may be connected to a single power supply 10. In the fault determination process for this configuration, for example, a power supply system fault may be determined using information indicating that power cannot be received from any given power transmission unit 4, even though power could be received from other power transmission units 4.

(C6) Furthermore, the system may include a first system having a plurality of the power transmission unit 4 connected to a first power supply 10 and a second system having a plurality of the power transmission unit 4 connected to a second power supply 10. In this configuration, for example, when power supply is possible from all the power transmission units 4 in the first system but not from all the power transmission unit 4s in the second system, a fault in the second power supply is determined. Furthermore, when power can be supplied from all the power transmission units 4 in the first system and also from some of the power transmission units 4 in the second system, but cannot be supplied from all of the power transmission unit 4 in the second system, it can be determined that some of the power transmission unit 4 in the second system have failed.

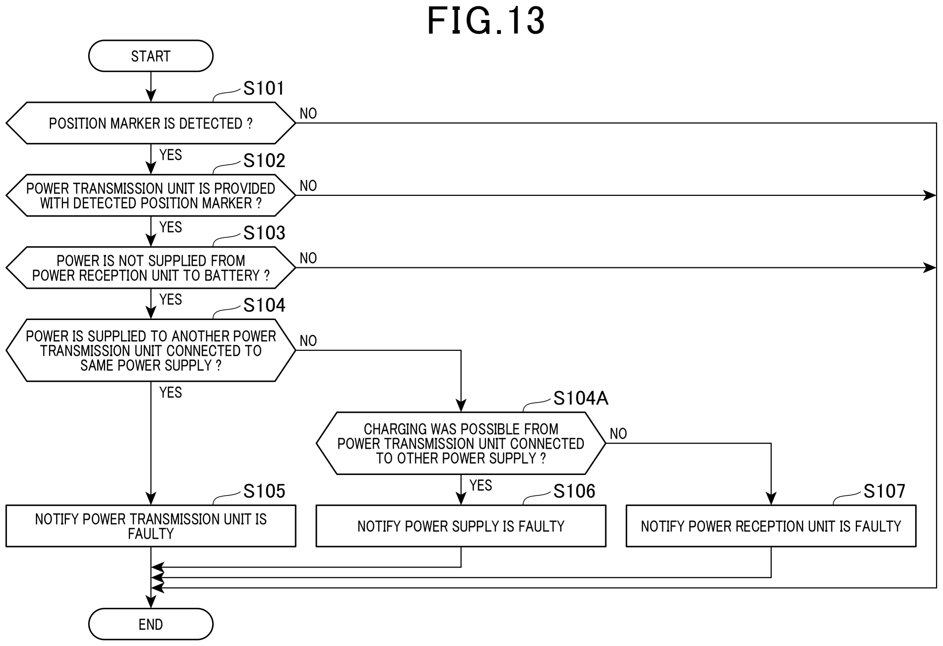

(C7) In the fault determination process of the above embodiments, a process for detecting a fault in the power reception unit 24 may be incorporated. In this configuration, as shown in Figure 13, in S104, when power supply was also not possible from other power transmission unit 4 connected to the single power supply 10 (S104: No), the process proceeds to S104A, where it is determined whether charging was possible from the power transmission unit 4 connected to other power supply. When charging was possible in the power transmission unit 4 connected to the other power supply (S104A: Yes), the process proceeds to S106 and notifies the management device 3 that the power supply 10 is faulty. On the other hand, when charging was also impossible in the power transmission unit 4 connected to the other power supply (S104A: No), the process proceeds to S107 and notifies the management device 3 that the power reception unit 24 is faulty.

(C8) In the above embodiments, the wiring 11 connecting the power supply 10 and the power transmission unit 4 was made as a flat sheet-like structure, but it may also be a wire having a circular cross-section. It may also be a flat sheet-like structure wiring 12 having a cross-sectional structure as shown in Figure 12. In a conductor 83 shown in Figure 12, hatching with different orientations is applied to distinguish the forward and reverse conduction paths. As shown in Figure 12, the conductor 83 inside the insulator 81 may be arranged in a configuration where the forward and reverse conduction paths are separated not only vertically but also horizontally. This configuration further suppresses magnetic field generation and reduces eddy current losses.

The present disclosure is not limited to the above-described embodiments and may be realized in various configurations within the scope of the spirit of the invention. For example, the technical features in each embodiment corresponding to the technical features described in the form in the Summary of the Invention may be appropriately substituted or combined to solve some or all the above-mentioned problems or to achieve some or all the above-mentioned effects. Furthermore, if a technical feature is not described herein as essential, it may be appropriately omitted.

### (Configuration 1)

A wireless power supply system for wireless power supply to a mobile object (2) comprising a power reception unit (24) including a power reception coil (26), the wireless power supply system comprising:
a power supply (10) configured to supply AC power; and
at least one power transmission unit (4) provided on at least a portion of a travelling surface (6) along which the mobile object travels, wherein
each of the at least one power transmission unit includes a power transmission coil (61) within a containment case (66), receives power from the power supply, and supplies power to the power reception unit via the power transmission coil from beneath the mobile object.

### (Configuration 2)

The wireless power supply system according to configuration 1, wherein
a plurality of position markers (7) are provided on the travelling surface as markers for a line along which the mobile object travels,
the mobile object travels along the plurality of position markers, and
each of the at least one power transmission unit is provided at a predetermined relative position with reference to one of the plurality of position markers on the travelling surface.

### (Configuration 3)

The wireless power supply system according to configuration 2, wherein
each of the plurality of position markers is integrated into one of the at least one power transmission unit.

### (Configuration 4)

The wireless power supply system according to any one of configurations 1 to 3, wherein
the mobile object has a plurality of wheels (22, 23),
the power transmission unit is exposed on top of the travelling surface, and
the containment case has an upper surface (72), the size of the upper surface is big enough that all the plurality of wheels can be placed on top of the containment case simultaneously.

### (Configuration 5)

The wireless power supply system according to configuration 4, further comprising
a slope (73) connected to the upper surface of the containment case, connecting the upper surface and the travelling surface.

### (Configuration 6)

The wireless power supply system according to any one of configurations 1 to 3, wherein
the mobile object has a plurality of wheels (22, 23), and
the power transmission unit is exposed on top of the travelling surface and provided avoiding the area through which the plurality of wheels pass.

### (Configuration 7)

The wireless power supply system according to any one of configurations 1 to 6, wherein
the mobile object has a plurality of wheels (22, 23),
the power transmission unit has an electronic component (67) within the containment case and is provided on the travelling surface such that the position of the electronic component is offset in a plan view from the travel trajectory line (L), which is the line passed by the plurality of wheels.

### (Configuration 8)

The wireless power supply system according to any one of configurations 1 to 7, wherein
the mobile object has a plurality of wheels (22, 23), and
within the containment case, a plurality of support pillars (71) are provided at positions corresponding to the travel trajectory line (L), which is the line along which the plurality of wheels pass, to maintain the vertical space within the containment case.

### (Configuration 9)

The wireless power supply system according to configurations 2 or 3, wherein
the mobile object comprises a marker sensor (25) configured to detect the position marker, detects the mobile object's own position using the detected position marker by the marker sensor, and travels along the position marker, and
an opening portion (29) is formed in the power reception unit corresponding to the detection range of the marker sensor.

### (Configuration 10)

The wireless power supply system according to configurations 2 or 3, wherein
the mobile object comprises a marker sensor (25) configured to detect the position marker, detects the mobile object's own position using the detected position marker by the marker sensor, and travels along the position marker, and
the marker sensor is integrated into the substrate included in the power reception unit.

### (Configuration 11)

The wireless power supply system according to configurations 2 or 3, wherein
the at least one power transmission unit is a plurality of power transmission units,
the mobile object comprises a marker sensor (25) configured to detect the position marker, detects the mobile object's own position using the detected position marker by the marker sensor, and travels along the position marker, and
the wireless power supply system further comprises a fault determination unit (31) configured to determine whether a fault in a power transmission system including the power supply and the power transmission unit occurs based on information indicating whether power reception was possible on another power transmission unit different from the power transmission unit of the own wireless power supply system, when the position marker for which the power transmission unit is integrated into is detected and the fault determination unit detects that power reception is not possible despite a power supply permission being issued from the mobile object.

### (Configuration 12)

The wireless power supply system according to configuration 11, wherein
in the power transmission system, the plurality of power transmission units are connected to the single power supply,
and the fault determination unit determines whether the fault occurs based on information indicating whether power could be received from another power transmission unit connected to the single power supply.

### (Configuration 13)

The wireless power supply system according to configurations 2 or 3, wherein
the mobile object comprises a marker sensor (25) configured to detect the position marker, detects the mobile object's own position using the detected position marker by the marker sensor, and travels along the position marker, and
the power transmission unit further comprises:
   a fault determination unit configured to determine whether a fault in the own power transmission unit occurs; and
   a notification unit configured to notify, in a form readable by the marker sensor indicating that the fault occurs when the fault determination unit determines the fault occurs.

### (Configuration 14)

The wireless power supply system according to any one of configurations 1 to 13, wherein
the mobile object is an unmanned conveyor vehicle capable of transporting a conveyed object, and
the at least one power transmission unit is provided at a stop position where the conveyor vehicle stops and the conveyed object is loaded, or at an access passage to/from the stop position.

## Claims

1. A wireless power supply system for wireless power supply to a mobile object (2) comprising a power reception unit (24) including a power reception coil (26), the wireless power supply system comprising:
a power supply (10) configured to supply AC power; and
at least one power transmission unit (4) provided on at least a portion of a travelling surface (6) along which the mobile object travels, wherein
each of the at least one power transmission unit includes a power transmission coil (61) within a containment case (66), receives power from the power supply, and supplies power to the power reception unit via the power transmission coil from beneath the mobile object.

2. The wireless power supply system according to Claim 1, wherein
a plurality of position markers (7) are provided on the travelling surface as markers for a line along which the mobile object travels,
the mobile object travels along the plurality of position markers, and
each of the at least one power transmission unit is provided at a predetermined relative position with reference to one of the plurality of position markers on the travelling surface.

3. The wireless power supply system according to Claim 2, wherein
each of the plurality of position markers is integrated into one of the at least one power transmission unit.

4. The wireless power supply system according to Claim 1, wherein
the mobile object has a plurality of wheels (22, 23),
the power transmission unit is exposed on top of the travelling surface, and
the containment case has an upper surface (72), the size of the upper surface is big enough that all the plurality of wheels can be placed on top of the containment case simultaneously.

5. The wireless power supply system according to Claim 4, further comprising
a slope (73) connected to the upper surface of the containment case, connecting the upper surface and the travelling surface.

6. The wireless power supply system according to Claim 1, wherein
the mobile object has a plurality of wheels (22, 23), and
the power transmission unit is exposed on top of the travelling surface and provided avoiding the area through which the plurality of wheels pass.

7. The wireless power supply system according to Claim 1, wherein
the mobile object has a plurality of wheels (22, 23),
the power transmission unit has an electronic component (67) within the containment case and is provided on the travelling surface such that the position of the electronic component is offset in a plan view from the travel trajectory line (L), which is the line passed by the plurality of wheels.

8. The wireless power supply system according to Claim 1, wherein
the mobile object has a plurality of wheels (22, 23), and
within the containment case, a plurality of support pillars (71) are provided at positions corresponding to the travel trajectory line (L), which is the line along which the plurality of wheels pass, to maintain the vertical space within the containment case.

9. The wireless power supply system according to Claim 2, wherein
the mobile object comprises a marker sensor (25) configured to detect the position marker, detects the mobile object's own position using the detected position marker by the marker sensor, and travels along the position marker, and
an opening portion (29) is formed in the power reception unit corresponding to the detection range of the marker sensor.

10. The wireless power supply system according to Claim 2, wherein
the mobile object comprises a marker sensor (25) configured to detect the position marker, detects the mobile object's own position using the detected position marker by the marker sensor, and travels along the position marker, and
the marker sensor is integrated into the substrate included in the power reception unit.

11. The wireless power supply system according to Claim 2, wherein
the at least one power transmission unit is a plurality of power transmission units,
the mobile object comprises a marker sensor (25) configured to detect the position marker, detects the mobile object's own position using the detected position marker by the marker sensor, and travels along the position marker, and
the wireless power supply system further comprises a fault determination unit (31) configured to determine whether a fault in a power transmission system including the power supply and the power transmission unit occurs based on information indicating whether power reception was possible on another power transmission unit different from the power transmission unit of the own wireless power supply system, when the position marker for which the power transmission unit is integrated into is detected and the fault determination unit detects that power reception is not possible despite a power supply permission being issued from the mobile object.

12. The wireless power supply system according to Claim 11, wherein
in the power transmission system, the plurality of power transmission units are connected to the single power supply,
and the fault determination unit determines whether the fault occurs based on information indicating whether power could be received from another power transmission unit connected to the single power supply.

13. The wireless power supply system according to Claim 2, wherein
the mobile object comprises a marker sensor (25) configured to detect the position marker, detects the mobile object's own position using the detected position marker by the marker sensor, and travels along the position marker, and
the power transmission unit further comprises:
a fault determination unit configured to determine whether a fault in the own power transmission unit occurs; and
a notification unit configured to notify, in a form readable by the marker sensor indicating that the fault occurs when the fault determination unit determines the fault occurs.

14. The wireless power supply system according to any one of Claims 1 to 13,
wherein
the mobile object is an unmanned conveyor vehicle capable of transporting a conveyed object, and
the at least one power transmission unit is provided at a stop position where the conveyor vehicle stops and the conveyed object is loaded, or at an access passage to/from the stop position.
